(19) Europäisches Patentamt
European Patent Office
Office européen des brevets

(11) **EP 3 112 323 B1**

(12) **EUROPÄISCHE PATENTSCHRIFT**

(45) Veröffentlichungstag und Bekanntmachung des Hinweises auf die Patenterteilung:
**01.09.2021 Patentblatt 2021/35**

(51) Int Cl.:
***C03B 23/047*** *(2006.01)*

(21) Anmeldenummer: **15175343.1**

(22) Anmeldetag: **03.07.2015**

(54) **VERFAHREN ZUR HERSTELLUNG EINES SUBSTRATROHRES AUS QUARZGLAS**

METHOD FOR PRODUCING A SUBSTRATE PIPE MADE OF QUARTZ GLASS

PROCEDE DE FABRICATION D'UN TUBE EN SUBSTRAT A BASE DE VERRE DE QUARTZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.01.2017 Patentblatt 2017/01**

(73) Patentinhaber: **Heraeus Quarzglas GmbH & Co. KG**
**63450 Hanau (DE)**

(72) Erfinder:
• **Ganz, Oliver**
**63486 Bruchköbel (DE)**
• **Hain, Harald**
**63796 Kahl (DE)**

(74) Vertreter: **Staudt, Armin Walter**
**Sandeldamm 24a**
**63450 Hanau (DE)**

(56) Entgegenhaltungen:
WO-A1-2005/009913    JP-A- 2007 320 803
US-A- 5 785 729    US-A1- 2008 041 112
US-A1- 2010 260 949    US-A1- 2012 011 889
US-A1- 2014 245 796

## Beschreibung

### Technischer Hintergrund

Die vorliegende Erfindung betrifft ein Verfahren zur Herstellung eines Substratrohres aus Quarzglas, umfassend einen Verfahrensschritt, bei dem ein einen Außendurchmesser $C_a$, einen Innendurchmesser $C_i$ und eine Innenbohrung aufweisender Quarzglas-Hohlzylinder kontinuierlich einer Heizzone zugeführt, darin bereichsweise erweicht und aus dem erweichten Bereich ein Rohrstrang mit einem Außendurchmesser $T_a$ und einem Innendurchmesser $T_i$ abgezogen und dabei in der Innenbohrung ein Blasdruck erzeugt wird.

Durch Ablängen des Rohrstrangs werden Substratrohre der gewünschten Länge erhalten. Sie dienen als Halbzeug bei der Herstellung von Vorformen für optische Fasern. Dabei werden auf der Innenwandung des Substratrohres zusätzliche Glasschichten aus der Gasphase abgeschieden.

### Stand der Technik

Aus der US 5,785,729 A ist ein Verfahren zur Herstellung einer Vorform für eine optische Faser nach der sogenannten Stab-in-Rohr-Technik (RIT) beschrieben. Dabei wird ein großvolumiges, dickwandiges Quarzglasrohr mit sehr präzisen Abmessungen als Überfangrohr für einen Kernstab eingesetzt. Zur Fertigung des hochpräzisen Quarzglasrohres kann von einem ebenfalls großvolumigen, dickwandigen Ausgangszylinder ausgegangen werden, dessen Abmessungen und Oberflächenqualität anhand mehrerer Behandlungsschritte voreingestellt werden. Einer der Behandlungsschritte ist eine mechanische Behandlung der Innenwandung des Ausgangszylinders. Als letzter Behandlungsschritt kommt eine thermische Verformung in Betracht, bei der der dickwandige Ausgangszylinder unter Bildung des dickwandigen Quarzglasrohres elongiert wird. Durch das Elongieren wird die angestrebte hohe Maßhaltigkeit des Überfangrohres erreicht und seine Innenwandung wird geglättet, so dass etwaige Oberflächenfehler infolge der vorherigen mechanischen Bearbeitung beseitigt werden.

Ein gattungsgemäßes Vertikalziehverfahren zur Herstellung eines Substratrohres ist aus der WO 2004/083141 A1 bekannt. Einem Ofen mit einem ringförmigen Heizelement aus Graphit wird von oben ein Hohlzylinder aus synthetischem Quarzglas in vertikaler Orientierung der Zylinder-Längsachse zugeführt. Der Hohlzylinder hat einen Außendurchmesser $C_a$ von 150 mm und einen Innendurchmesser $C_i$ von 70 mm. Das Durchmesserverhältnis $C_r = C_a/C_i$ beträgt somit etwa 2,14. Nachdem der Ofen auf seine Solltemperatur von ca. 2.300 °C aufgeheizt ist, wird der Hohlzylinder mit einer Absenkgeschwindigkeit von 11 mm/min kontinuierlich in den Ofen eingefahren und dabei zonenweise erweicht. Gleichzeitig wird mittels eines Abzugs mit einer Geschwindigkeit von 640 mm/min ein Rohrstrang mit einem Innendurchmesser $T_i$ von 22 mm und einem Außendurchmesser $T_a$ von 28 mm abgezogen. Das Durchmesserverhältnis beim Rohrstrang $T_r = T_a/T_i$ beträgt somit etwa 1,27.

Während des Ziehprozesses werden mittels einer Prozessregelung Außendurchmesser und Wandstärke des abgezogenen Rohrstrangs konstant gehalten. Als Stellgröße der Regelung dient der Innendruck innerhalb der Hohlzylinder-Innenbohrung. Dieser wird erzeugt und aufrechterhalten, indem in die Hohlzylinder-Innenbohrung ein Stickstoffstrom eingeleitet wird. Der eingesetzte Stickstoff wird vorab getrocknet, um den Einbau von Hydroxylgruppen (OH-Gruppen) in das Quarzglas der Innenwandung zu vermeiden. Die Stickstoff-Durchflussmenge ist so bemessen (etwa 30 l/min), dass sich ein Blasdruck von etwa 1,5 mbar einstellt. Das untere Ende des abgezogenen Rohrstrangs ist mittels eines Stopfens partiell verschlossen, um ein freies Ausströmen des Stickstoffstroms und eine dadurch verursachte Abkühlung der Innenwandung des abgezogenen Quarzglasrohres durch die Gasströmung zu vermeiden. Es wird eine glatte Innenwandung erhalten, die sich durch eine mittlere Oberflächenrauigkeit $R_a$ von 0,06 μm auszeichnet.

Das so erzeugte Glasrohr wird in geeignete Teilstücke abgelängt und als Substratrohr für die Abscheidung von $SiO_2$-Schichten auf der Innenwandung mittels eines MCVD-Verfahrens verwendet.

### Technische Aufgabenstellung

Die Innenwandung des Substratrohres bildet eine Kontaktfläche zu einem anderen, nachträglich hinzugefügten Glas, das entweder zum Kern der optischen Faser gehört oder das zum Faserkern benachbart ist. Daher muss die Substratrohr-Innenwandung grundsätzlich frei von Fehlern und Verunreinigungen sein.

Das in der der WO 2004/083141 A1 vorgeschlagene Trocknen des Stickstoffstromes stellt eine wirksame Maßnahme zur Begrenzung des Einbaus von Hydroxylgruppen in das Quarzglas der Innenwandung dar; verteuert aber auch die ohnehin kostenintensive Substratrohr-Fertigung.

Es ist auch vorgeschlagen worden, die Innenwandung des Substratrohres abschließend abzutragen, beispielsweise durch mechanisches Abfräsen oder durch Ätzen, um auf oder in der Oberflächenschicht enthaltene Verunreinigungen zu entfernen. Diese Verfahrensweisen sind jedoch aufwändig und langsam und sie stellen zusätzliche Quellen für Verunreinigungen und Oberflächenfehler dar.

Die bekannten Elongierverfahren zur Herstellung von Substratrohren sind typischerweise werkzeugfreie Vertikalziehverfahren. Ein Formwerkzeug kommt weder bei Formung der Außenwandung noch der Innenwandung zum Einsatz. Denn aus einem Formwerkzeug freigesetzte Dämpfe und Partikel oder durch den mechanischen Kontakt erzeugte Ziehstreifen könnten ansonsten die Zylindermantelflächen des Substratrohres ruinieren.

Das werkzeugfreie Umformen des Ausgangs-Hohlzylinders bringt allerdings Probleme bei der Einhaltung der nominalen radialen Abmessungen des Rohrstrangs und der Rotationssymmetrie mit sich. Insbesondere werden hochfrequente Durchmesserschwankungen sowie Ovalitäten im radialen Querschnittsprofil oder Wandeinseitigkeiten beobachtet, also radial ungleichmäßige Verläufe der Rohrwanddicke, was in Fachkreisen auch als "Siding" bezeichnet wird. Diese Probleme sind umso ausgeprägter, je massiver der Umformprozess vom Hohlzylinder zum Rohr ist. Ein Maß dafür ist das sogenannte "Elongierverhältnis" oder "Ausziehverhältnis". Darunter wird das Verhältnis der Längen von abgezogenem Rohrstrang und Ausgangszylinder verstanden.

Zwecks Verbesserung der Maßhaltigkeit bei Elongierprozessen mit hohem Ausziehverhältnis wurde eine Vielzahl von Maßnahmen vorgeschlagen, wie etwa ein Rotieren des Ausgangszylinders um seine Zylinder-Längsachse, der Einsatz kurzer oder langer Heizzonen oder die Optimierung der Spaltweite zwischen Heizzone und Hohlzylinder. Eine reproduzierbare Übertragung dieser Maßnahmen auf die Herstellung von Substratrohren durch werkzeugfreies Elongieren erweist sich jedoch als schwierig.

Der Erfindung liegt daher die Aufgabe zugrunde, einen Elongierprozess zur kostengünstigen Herstellung von Substratrohren mit hoher Maßhaltigkeit und Oberflächenqualität bereitzustellen.

Allgemeine Darstellung der Erfindung

Diese Aufgabe wird ausgehend von einem Verfahren der eingangs genannten Gattung erfindungsgemäß dadurch gelöst, dass der Blasdruck im Bereich von 4 bis 10 mbar eingestellt wird, und dass für Hohlzylinder und Rohrstrang gelten:
$C_a > 180$ mm,

$$C_r > 3 \text{ mit } C_r = C_a/C_i,$$

$$T_r < 1{,}6 \text{ mit } T_r = T_a/T_i$$

und

$$C_i/T_i < 2{,}5.$$

Im Folgenden werden zunächst einige Begriffe und anschließend die Wirkung der Maßnahmen des erfindungsgemäßen Verfahrens im Einzelnen erläutert.

"Blasdruck" bezeichnet den in der Hohlzylinder-Innenbohrung herrschenden Überdruck gegenüber dem außerhalb davon anliegenden Druck. Der außerhalb der Innenbohrung anliegende Druck ist im einfachsten Fall Atmosphärendruck. Der Blasdruck wird durch Einleiten eines Druckgases, wie beispielsweise Stickstoff, in die Hohlzylinder-Innenbohrung erzeugt und aufrechterhalten. Die Höhe des Blasdrucks wirkt sich auf die Wanddicke des abgezogenen Rohrstrangs aus.

"Ziehzwiebel" ist der Übergangsbereich, der sich beim Elongierprozess zwischen Hohlzylinder und abgezogenem Rohrstrang aus der in der Heizzone erweichten Hohlzylinder-Glasmasse bildet. Innerhalb der Ziehzwiebel ist die Hohlzylinder-Innenbohrung nicht vollständig kollabiert, so dass die weiterhin einen durchgängigen Kanal zwischen den Innenbohrungen von Hohlzylinder und Rohrstrang aufweist.

"Ausgangszylinder" bezeichnet den Quarzglas-Hohlzylinder, der dem Elongierprozess unterzogen wird. Die "Innenoberfläche" ist die freie Oberfläche der die Innenbohrung begrenzenden Innenwandungen von Hohlzylinder und abgezogenem Rohr einschließlich der Ziehzwiebel.

Beim Elongierprozess unterliegt die Innenbohrung des Ausgangszylinders einer beträchtlichen Gestaltänderung, was hier auch als "Umformprozess" bezeichnet wird. Die Innenbohrung wird dabei enger und länger. Dies wirkt sich in unterschiedlicher Weise auf die Größe der Innenoberfläche aus. Die Verengung der Innenbohrung führt zu einer Verringerung, und die Längung führt zu einer Vergrößerung der Innenoberfläche. Beim erfindungsgemäßen Verfahren wird im Ergebnis stets neue Innenwandungs-Oberfläche gebildet. Der Neubildungsgrad an Innenoberfläche, ausgedrückt als Verhältnis der nominalen Innenoberflächen von Hohlzylinder und Rohrstrang ist neben dem Ausziehverhältnis ein weiteres Maß für die Intensität / den Grad des Umformprozesses.

Es wurde gefunden, dass die Qualität der Innenwandung des abgezogenen Rohrstrangs von der Intensität des Umformprozesses abhängt. Ein intensiver Umformprozess führt tendenziell zu einer besseren, glatteren Innenoberfläche. Andererseits besteht bei einem hohen Umformgrad beim werkzeugfreien Elongierprozess die Gefahr einer Verschlechterung von Maßhaltigkeit und Rotationssymmetrie beim abgezogenen Rohrstrang. Es hat sich gezeigt, dass es insbesondere in Verbindung mit hohen Temperaturen der Glasmasse auch leicht zu einer Biegung des Rohrstrangs entlang der Längsachse kommt.

Ausgehend von typischen Substratrohr-Außendurchmessern im Bereich von etwa 30 bis 40 mm wurde daher versucht, einen Ausgangszylinder zu bereitzustellen, dessen radiale Abmessungen so sind, dass sie beim Elongierprozess beide Randbedingungen möglichst gut erfüllen, dass sich also gleichzeitig eine hohe Maßhaltigkeit und eine hohe Qualität der Innenoberfläche des abgezogenen Rohrstrangs einstellen. Es zeigte sich, dass dabei dem Blasdruck eine maßgebliche Rolle zukommt. Auf diese Weise ergab sich unter zusätzlicher Anpassung des Blasdrucks die in Anspruch 1 genannte technische Lehre:

Um einen hohen Umformgrad zu erreichen, wird als Ausgangszylinder ein dickwandiger Hohlzylinder mit einem Außendurchmesser $C_a$ von mindestens 180 mm eingesetzt. Die Dickwandigkeit des Hohlzylinders zeigt sich darin, dass das Durchmesserverhältnis $C_r$ von Außendurchmesser ($C_a$)/ Innendurchmesser ($C_i$) größer als 3 ist ($C_r > 3$).

Aus dem dickwandigen Ausgangszylinder wird im Umformprozess ein vergleichsweise dünnwandiger Rohrstrang und damit ein dünnwandiges Substratrohr erhalten. Die Dünnwandigkeit des Rohrstrangs zeigt sich darin, dass das Durchmesserverhältnis $T_r$ von Außendurchmesser ($T_a$)/ Innendurchmesser ($T_i$) kleiner als 1,6 ist ($T_r < 1,6$).

Dieser Umformprozess erfordert ein großes Elongierverhältnis und bewirkt die Schaffung neuer Oberfläche, einhergehend mit einer glatten Innenwandung beim abgezogenen Rohrstrang.

Die Neubildung an der Innenoberfläche beruht dabei in erster Linie auf dem Strecken des Ausgangszylinders in Richtung seiner Längsachse. Um aber andererseits beträchtliche radiale Verformungen zum Kollabieren der Hohlzylinder-Innenbohrung, die leicht zu Durchbiegungen, Verwerfungen und Oberflächenfehlern führen können, möglichst zu vermeiden, ist vorgesehen, dass sich die Durchmesser der Innenbohrungen von Hohlzylinder und Rohrstrang um maximal den Faktor 2,5 voneinander unterscheiden ($C_i/T_i < 2,5$). Diese Maßnahme gewährleistet Maßhaltigkeit und Rotationssymmetrie des abgezogenen Rohrstrangs.

Der Blasdruck wird auf den Bereich zwischen von 4 bis 10 mbar eingestellt. Dabei handelt es sich um einen vergleichsweise hohen Druck. Dieser trägt zu einer raschen Umformung des Ausgangszylinders im Bereich der Ziehzwiebel bei, was die Prozessdauer verringert, während der die neu geschaffene Innenoberfläche den hohen Umformtemperaturen und dem Druckgas ausgesetzt ist. Der Eintrag von Verunreinigungen in das Glas wird dadurch minimiert, so dass auf den Einsatz besonders behandelter und teurer Gase zur Erzeugung des Blasdrucks verzichtet werden kann. Dies macht sich besonders bei der an und für sich langwierigen Umformung dickwandigen Hohlzylinder positiv auf die Oberflächenqualität des Substratrohres bemerkbar.

Der erfindungsgemäße Elongierprozess unter Einsatz eines dickwandigen Ausgangszylinders ermöglicht somit unter Beachtung der genannten Rahmenbedingungen in Bezug auf $C_r$ und $T_r$, das Innendurchmesserverhältnis $C/T_i$ und den Blasdruck die kostengünstige Fertigung von Substratrohren mit hoher Maßhaltigkeit und Oberflächenqualität.

Je dickwandiger der Ausgangszylinder und je größer der Unterscheid zwischen den Innendurchmessern von Hohlzylinder und Rohrstrang sind, umso intensiver ist der Umformprozess, umso länger sind die Verweildauern des heißen Quarzglases in der Ziehzwiebel und umso größer ist damit die Gefahr eines Eintrages von Verunreinigungen in das erweichte Quarzglas.

Daher ist bei einer bevorzugten Verfahrensweise vorgesehen, dass der Blasdruck im Bereich von 6 bis 8 mbar eingestellt wird, und dass für den Hohlzylinder gilt:

$$C_a < 300 \text{ mm}$$

und

$$C_i/T_i < 2.$$

Substratrohre zeichnen sich allgemein durch eine vergleichsweise geringe Wandstärke und einen großen Innendurchmesser von mindestens 20 mm aus. Das erfindungsgemäße Verfahren ist besonders angepasst an die Herstellung von Substratrohren, bei denen für den Rohrstrang gilt:

$$28 \text{ mm} < T_a < 50 \text{ mm}$$

und

$$T_r < 1,3.$$

Zwecks hoher Umformrate wird ein dickwandiger Hohlzylinder eingesetzt, bei dem das Durchmesserverhältnis Außendurchmesser/Innendurchmesser groß ist im Vergleich zu dem daraus zu erzeugenden Substratrohr. Im Hinblick darauf hat es sich bewährt, wenn für Hohlzylinder und Rohrstrang gelten:

$$3,5 < C_r < 4,5$$

und

$$C_r > T_r + 2,4.$$

Durch mechanische Bearbeitung (insbesondere Bohren, Honen und Schleifen) kann ein Quarzglas-Rohling zu einem geraden Zylinder mit exakt-kreisförmigem Querschnitt und geringen Maßabweichungen verarbeitet werden. Um einen Elongierprozess mit definiertem und reproduzierbarem Ausgangszustand zu gewährleisten, erhalten die Zylindermantelflächen des Hohlzylinders daher in der Regel ihre Endabmessung durch mechanische Bearbeitung. Die dabei entstehenden Oberflächenrisse und -strukturen können durch Schleif-, Hon- und Polierschritte sukzessive vermindert werden, in der Regel gefolgt von einer abschließenden Ätzbehandlung. Der Bearbeitungsaufwand bestimmt die dabei erzielbare Oberflächenqualität, die häufig durch die Oberflächenrauigkeit der bearbeiteten Zylindermantelfläche charakterisiert wird.

Es hat sich gezeigt, dass wegen des hohen Umformgrades beim erfindungsgemäßen Verfahren der abgezogene Rohrstrang auch dann eine hinreichend glatte Innenoberfläche erhält, wenn der Bearbeitungsaufwand zur Glättung der Innenwandung des Hohlzylinders vergleichsweise gering ist. Daher ist bei einer besonders bevorzugten Verfahrensweise vorgesehen, dass der Hohlzylinder eine Innenbohrung mit einer Innenwandung hat, die eine Oberflächenrauigkeit aufweist, die durch einen Rauheitswert $R_z > 1$ µm definiert ist.

Die Rauheitskenngröße Rz nach DIN EN ISO 4287 wird als "gemittelte Rautiefe" bezeichnet. $R_z$ ist die Summe aus der Höhe der größten Profilspitze und der Tiefe des tiefsten Profiltals innerhalb einer Einzelmessstrecke. Üblicherweise ergibt sich $R_z$ aus Mittelung der Ergebnisse von fünf Einzelmessstrecken. Eine "gemittelte Rautiefe" $R_z$ von 1 µm oder mehr ist durch Oberflächenbearbeitung durch Abschleifen und Honen erreichbar. Auf den Politurschritt wird dabei verzichtet. Dieder mechanischen Bearbeitung angeschlossene optionale Ätzbehandlung bewirkt in der Regel eine weitere Vergrößerung von $R_z$. Die Maßgabe Rz>1 µm bezieht sich daher auf den Zustand der Innenoberfläche des Hohlzylinders vor dem Elongierprozess, unabhängig davon ob dieser Zustand allein durch mechanische Bearbeitung oder durch mechanische Bearbeitung und Ätzbehandlung erzeugt worden ist.

Das erfindungsgemäße Verfahren toleriert eine vergleichsweise geringe Oberflächenqualität der Hohlzylinder-Innenwandung und ermöglicht damit den Einsatz von Hohlzylindern, die infolge einer weniger aufwändigen mechanischen Bearbeitung ihrer Innenwandung vergleichsweise kostengünstig hergestellt werden können

Die Anforderungen an die Qualität der Außenmantelfläche des Hohlzylinders sind sogar noch etwas geringer. Der Hohlzylinder hat vorzugsweise eine Außenwandung, die eine Oberflächenrauigkeit aufweist, die durch einen Rauheitswert $R_z > 4$ µm definiert ist. Auch die Maßgabe Rz > 4 µm für den Zustand der Außenmantelfläche vor dem Elongierprozess ist unabhängig davon ob die Außenwandung diesen Zustand allein durch mechanische Bearbeitung oder durch mechanische Bearbeitung und Ätzbehandlung erhalten hat.

Beim erfindungsgemäßen Verfahren wird die Qualität der Innenwandung des Rohrstrangs in erster Linie durch die oben erläuterten Blasdruck- und GeometrieParameter bestimmt, die den Grad und die Umformgeschwindigkeit des Umformprozesses festlegen. Insbesondere hinsichtlich der Umformgeschwindigkeit kommt der Form und Größe der Heizzone eine gewisse Bedeutung zu. In dem Zusammenhang hat es sich als vorteilhaft erwiesen, wenn eine Heizzone eingesetzt wird, die einen von einer Innenwandung begrenzten, kreisrunden Innenraum aufweist, der ein Heizraumvolumen $V_{Heiz}$ definiert, innerhalb dem Hohlzylinder, Ziehzwiebel und Rohrstrang ein Zylinder-Raumvolumen $V_c$

einnehmen, wobei gilt:

$$V_{Heiz} > 2,5 \text{ x } V_c.$$

Das Heizraumvolumen $V_{Heiz}$ ist durch den Innenraum des für die Maximaltemperatur maßgeblichen Heizelements definiert. Bei einer Heizeinrichtung mit mehreren übereinander angeordneten Heizelementen, definiert dasjenige Heizelement mit der höchsten Temperatur das Heizraumvolumen $V_{Heiz}$. Das Zylinder-Raumvolumen $V_c$ ergibt sich als Summe der Raumvolumenanteile von Hohlzylinder, Ziehzwiebel und gegebenenfalls Rohrstrang, die sich innerhalb des Heizraumvolumens befinden, ohne Berücksichtigung des Volumens der Innenbohrung. Das Zylinder-Raumvolumen $V_c$ entspricht somit dem Volumen, das die Außen-Umhüllende um die Masse von Hohlzylinder/Ziehzwiebel/Rohrstrang innerhalb der Heizzone definiert. Dadurch dass das Zylinder-Raumvolumen um mindestens den Faktor 2,5 kleiner ist als das Heizraumvolumen ergibt sich eine vergleichsweise diffuse Abbildung der Temperaturverteilung am Heizelement auf die Ziehzwiebel. Es hat sich gezeigt, dass dadurch auch bei hohem Umformgrad die Einhaltung einer hohen Maßhaltigkeit des Rohrstrangs erleichtert wird.

In dem Zusammenhang hat es sich auch als günstig erwiesen, wenn zwischen der Heizzonen-Innenwandung und dem Hohlzylinder ein Ringspalt mit einer mittleren Spaltweite im Bereich von 15 und 25 mm verbleibt.

Je enger der Spalt zwischen der Heizzonen-Innenwandung und dem Hohlzylinder ist, umso genauer wird die Temperaturverteilung eines Heizelements auf den Hohlzylinder abgebildet. Bei Spaltweiten von weniger als 15 mm stellt sich eine vergleichsweise kleine Ziehzwiebel mit einem vergleichsweise kleinen Ziehzwiebelvolumen ein. Wegen der relativ großen Volumenänderungen beim erfindungsgemäßen Verfahren wird jedoch ein größeres Ziehzwiebelvolumen angestrebt, wie es sich infolge der genannten Spaltweiten im Bereich von 15 und 25 mm einstellt, insbesondere wenn die Heizzone eine Länge L zwischen 150 und 200 mm aufweist.

Umformgrad und Umformgeschwindigkeit spiegeln sich in Verbindung mit den Geometriedaten des Ausgangszylinders und des Rohrstrangs auch im Durchsatz wider. Ein hohes Durchsatzvolumen geht mit einem hohen Umformgrad einher. In dem Zusammenhang wird eine Verfahrensweise bevorzugt, bei der das Durchsatzvolumen einen Wert im Bereich von 15 bis 25 kg/h einnimmt, wenn der Rohrstrang-Außendurchmesser Ta auf einen Wert im Bereich von 28 bis maximal 35 mm eingestellt wird.

Alternativ dazu wird bei einem Rohrstrang-Außendurchmesser Ta im Bereich von 35 bis 50 mm das Durchsatzvolumen bevorzugt auf einen Wert im Bereich von 20 bis 30 kg/h eingestellt.

Der Umformgrad wird beim erfindungsgemäßen Verfahren maßgeblich durch die Zunahme an Innenoberfläche vom Hohlzylinder zum Rohr bestimmt. Dabei spielt das Elongierverhältnis eine wesentliche Rolle. Bevorzugt wird der Rohrstrang mit einem Elongierverhältnis von weniger als 150 abgezogen, besonders bevorzugt im Bereich zwischen 50 und 130.

Ausführungsbeispiel

Nachfolgend wird die Erfindung anhand eines Ausführungsbeispiels und einer Zeichnung näher erläutert. Dabei zeigt im Einzelnen:

Figur 1     eine Vorrichtung zur Durchführung des erfindungsgemäßen Verfahrens in schematischer Ansicht, und

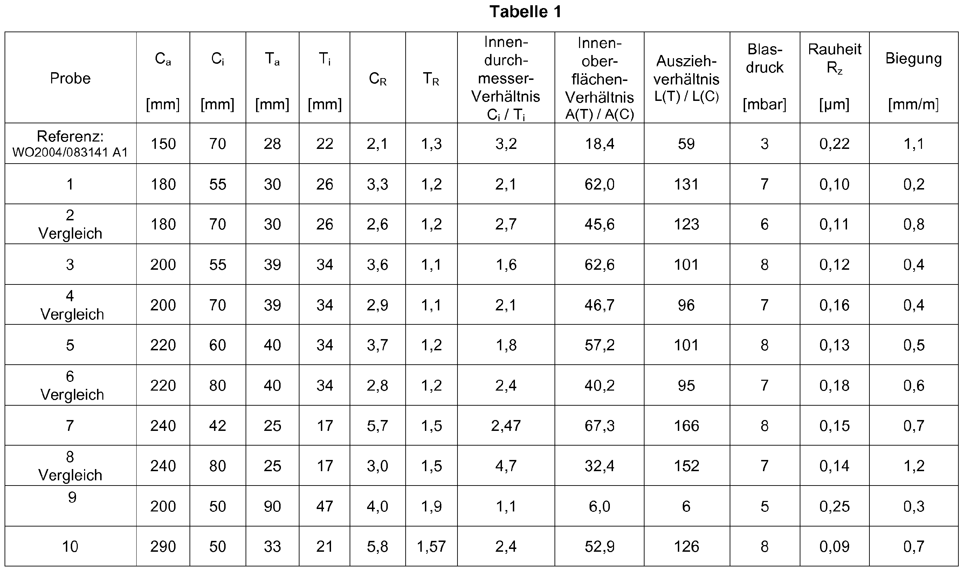

Figur 2     eine Tabelle mit Versuchsparametern und Ergebnissen.

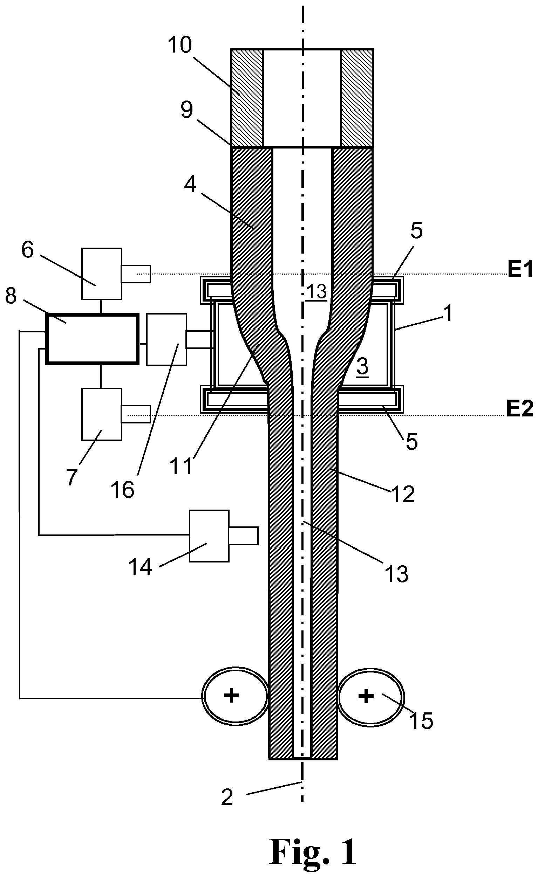

Die Vorrichtung gemäß **Figur 1** dient zum werkzeugfreien Elongieren eine Hohlzylinders 4. Sie umfasst einen Widerstands-Heizofen, der im Wesentlichen aus einem vertikal orientierten Heizrohr 1 aus Graphit besteht, das einen im horizontalen Querschnitt kreisförmigen Heizraum 3 umschließt. Das Heizrohr 1 besteht aus einem ringförmigen Element mit einem Innendurchmesser von 240 mm, einem Außendurchmesser von 260 mm und einer Länge von 180 mm. Es besteht aus Grafit mit geringem Aschegehalt. Das Grafit-Heizrohr 1 umschließt die eigentliche Heizzone. Es ist beiderseits mittels 55 mm breiten Verlängerungsstücken 5 aus Grafitrohr verlängert, die einen Innendurchmesser von 250 mm und einen Außendurchmesser von 280 mm haben. Wegen ihrer größeren Wandstärke und ihres größeren Abstandes zum Hohlzylinder-Mantel ist die auf den Hohlzylinder 4 einwirkende Temperatur im Bereich der Verlängerungsstücke 5 um mehr als 50 °C niedriger als die Maximal-Temperatur im Bereich der Heizzone. Das Innenvolumen der Heizzone Vc beträgt somit etwa 8140 mm³.
In Höhe einer oberen Erfassungsebene E1 (an der Oberkante des oberen Verlängerungsstücks 5) ist ein Pyrometer 6 angeordnet, welches die Oberflächentemperatur des Hohlzylinders 1 erfasst. In Höhe einer unteren Erfassungsebene E2 (an der Unterkante des unteren Verlängerungsstücks 5) ist ein weiteres Pyrometer 7 angeordnet, welches die Oberflächentemperatur des elongierten Rohrstrangs 12 erfasst. Die Temperatur-Messwerte der Pyrometer 6 und 7 sowie die vom Pyrometer 16 gemessene Temperatur des Heizrohres 1 werden jeweils einem Rechner 8 zugeführt.
Das obere Ende des Hohlzylinders 4 ist über eine Schweißverbindung 9 mit einem Quarzglas-Halterohr 10 verbunden, mittels dem es in horizontaler und vertikaler Richtung verschiebbar ist.
Der Hohlzylinder 4 wird so ausgerichtet, dass seine Längsachse möglichst koaxial zur Mittelachse 2 des Heizrohres 1 verläuft. Er wird dem Heizraum 3 (mit seinem untern Ende beginnend) mit einer konstanten Vorschubgeschwindigkeit von oben zugeführt und darin erweicht. Aus dem erweichten Bereich wird unter Bildung einer Ziehzwiebel 11 ein Rohrstrang 12 vertikal nach unten abgezogen. Der Rohrstrang 12 wird dabei entlang eines Wanddickenmessgerät 14 geleitet, das ebenfalls mit dem Rechner 8 verbunden ist, so dass während des Ziehprozesses die Wanddicke des abgezogenen Rohrstrangs 12 aufgezeichnet und mit Hilfe des Rechners 8 ausgewertet werden kann. Die durchgehende Innenbohrung von Hohlzylinder 4 und Rohrstrang 12 trägt die Bezugsziffer 13. Die Rohrabzugsgeschwindigkeit wird mittels eines Abzugs 15 erfasst und über den Rechner 8 eingestellt.
Nachfolgend wird ein Ausführungsbeispiel für die Durchführung des erfindungsgemäßen Vertikalziehverfahrens zur Herstellung eines Quarzglasrohres anhand der Vorrichtung von Figur 1 näher erläutert.

*Herstellung von Hohlzylindern*

Anhand eines üblichen OVD-Verfahrens (Outside Vapor Deposition) werden auf einem um seine Längsachse rotierenden Träger durch Hin- und Herbewegung eines Abscheidebrenners schichtweise $SiO_2$-Sootpartikel abgeschieden. Nach Beendigung des Abscheideverfahrens und Entfernen des Trägers wird ein poröses Rohr aus $SiO_2$-Soot erhalten, das zum Entfernen der herstellungsbedingt eingebrachten Hydroxylgruppen einer Dehydratationsbehandlung unterworfen wird. Dabei wird das Sootrohr in vertikaler Ausrichtung in einen Dehydratationsofen eingebracht und zunächst bei einer Temperatur im Bereich von 850 °C bis etwa 1000 °C in einer chlorhaltigen Atmosphäre behandelt. Nach einer Behandlungsdauer von sechs Stunden hat sich in dem Sootmaterial eine Hydroxylgruppenkonzentration von weniger als 100 Gew.-ppb eingestellt.
Das so behandelte Sootrohr wird in einem Verglasungsofen bei einer Temperatur im Bereich um 1350 °C verglast, ohne dass die Innenbohrung kollabiert. Die beiden Endbereiche des so hergestellten rohrförmigen Quarzglas-Rohlings aus synthetischem Quarzglas werden abgeschnitten und die Außenwandung mittels Umfangsschleifers, der mit einem #80 Schleifstein bestückt ist, grob geschliffen, wodurch der vorgegebene Soll-Außendurchmesser im Wesentlichen erhalten wird. Die Außenfläche des Rohres wird dann mittels eines NC-Umfangsschleifers fein geschliffen. Die Innenbohrung des so erhaltenen Rohres wird insgesamt mittels einer Honmaschine, die mit einer #80 Honleiste bestückt ist gehont, wobei der Glättungsgrad fortlaufend verfeinert wird, und die Endbehandlung mit einer #800 Honleiste erfolgt. Anschließend wird der Hohlzylinder in einer 30%igen Flusssäure-Ätzlösung kurz geätzt. Die mittlere Oberflächenrauheit $R_z$ im Bereich der Innenwandung liegt danach bei 5,5 μm, und im Bereich der Außenwandung bei 100 μm.
Auf diese Weise wurden Hohlzylinder mit unterschiedlichen radialen Abmessungen aus synthetischem Quarzglas gefertigt. Die Abmessungen sind in Tabelle 1 aufgeführt.

### Herstellung von Substratrohren

Die Hohlzylinder wurden zur Herstellung von Substratrohren anhand eines Elongierprozesses eingesetzt, der im Folgenden anhand eines Beispiels näher erläutert wird.

In dem vertikal ausgerichteten Heizrohr 1 wird ein Quarzglas-Hohlzylinder 4 mit einem Außendurchmesser von 200 mm und einem Innendurchmesser von 50 mm so justiert, dass seine Längsachse koaxial zu Mittelachse 2 des Heizrohres 1 verläuft. Der in der Mittelachse 2 des Heizrohres 1 positionierte Quarzglas-Hohlzylinder 4 wird anschließend mit einem vorgegebenen Vorschub in das Heizrohr 1 so abgelassen, dass sich ein Massendurchsatz von 20 kg/h ergibt. In der Heizzone wird der Hohlzylinder 4 auf eine Temperatur oberhalb von 2.200 °C erhitzt. Aus der sich bildenden Ziehzwiebel 11 wird der Quarzglas-Rohrstrang 12 mit geregelter Ziehgeschwindigkeit auf einen nominalen Außendurchmesser von 40 mm und einen Innendurchmesser von 36 mm (Wanddicke: 2 mm) abgezogen. Hohlzylinder 4, Ziehzwiebel 11 und Rohrstrang 12 nehmen innerhalb der Heizzone 3 mit dem Heizraumvolumen $V_{Heiz}$ (etwa 8.100 mm$^3$) insgesamt ein Zylinder-Raumvolumen von etwa 2700 mm$^3$ ein.

Während des Ziehprozesses wird über eine (in der Figur nicht gezeigte) Spülgasleitung ein Stickstoffstrom in die Innenbohrung 13 eingeleitet. Der Stickstoffstrom ist so bemessen, dass sich in der Innenbohrung 13 ein Blasdruck von 7 mbar einstellt. Der Blasdruck wird kontinuierlich gemessen und der Durchfluss des Stickstoffstroms entsprechend nachgeregelt. Durch Einsatz eines Stopfens, der das untere Ende des Rohrstrangs 12 teilweise verschließt, kann das freie Ausströmen des Stickstoffstroms behindert und die Durchflussmenge auf etwa 30 l/min begrenzt werden. Dies hat zu Folge, dass eine übermäßige Abkühlung der Innenwandung des Rohrstrangs 12 durch die Gasströmung vermieden und eine glatte geschmolzene Oberfläche erhalten wird, die durch einen gemittelten Rauheitswert $R_z$ = 0,10 μm gekennzeichnet ist (Tabelle 1: Probe 1).

Mittels der Prozessregelung werden der Außendurchmesser und die Wandstärke des abgezogenen Rohrstrangs 12 geregelt. Als Stellgröße für die Wandstärke dient der Blasdruck innerhalb der Innenbohrung 13, er sich wiederum im Wesentlichen durch den Stickstoffstrom ergibt, so dass bei Maßänderungen die Menge des Stickstoffstroms mittels einer Regeleinheit reguliert wird.

Weitere Ziehversuche mit den in Tabelle 1 genannten Parametern wurden analog zu den oben anhand Probe 1 erläuterten Verfahrensweisen durchgeführt, insbesondere mit den dort genannten Parametern für die mechanische Bearbeitung des Hohlzylinders vor dem Elongierprozess. Im Unterschied zum Massendurchsatz bei Probe 1 von 20 kg/h wurde bei den Proben mit einem nominalen Rohrstrang-Außendurchmesser von mehr als 35 mm der Massendurchsatz auf 40 kg/h eingestellt; bei der Probe 9 sogar auf 50 kg/h.

### Messung der Rohrbiegung

Aus jedem Rohrstrang 12 werden Teilstücke der gewünschten Substratrohr-Länge abgeschnitten. Die Enden des Rohrstücks werden in einer Drehbank mit definierter Rotationsachse eingespannt. Das um die Rotationsachse rotierende Rohrstück wird senkrecht zur Rotationsachse mittels eines über den Rohrdurchmesser hinaus aufgeweiteten Laserstrahls beleuchtet. Aus der Abschattung des Laserstrahls ergeben sich für jede Umfangsposition der Rohr-Außendurchmesser und die Position des Rohr-Mittelpunkts (als halber Außendurchmesser) an der jeweiligen axialen Messstelle (M). Der maximale Versatzwert (Max(Bow)$_M$) zwischen Rotationsachse und Rohrmittelpunkt an der axialen Messstelle wird abgespeichert. Die axiale Messstelle wird in 75 mm-Schritten entlang der Rohrstück-Längsachse verlagert, bis das gesamte Rohrstück vermessen ist. Aus den maximalen Versatzwerten (Max(Bow)$_M$) aller Messstellen wird der größte Versatz (Bow$_{max}$) ermittelt. Die auf 1 Meter normierte Berechnung der Durchbiegung des Rohrstücks unter Berücksichtigung der Rohrstücklänge (L) erfolgt dann anhand folgender Gleichung: Biegung [mm/m] = Bow$_{max}$ [mm] / L [m].

Die aus einem Hohlzylinder 4 erhaltenen Rohrstücke bilden jeweils eine Charge. Der in der letzten Spalte von Tabelle 1 genannte Biegungswert stellt den Median der betreffenden Charge dar, also denjenigen Wert, der in der nach Größe sortierten Liste an mittlerer Stelle steht.

### Messung der Rauheitskenngröße $R_z$

Die Rauheitskenngröße $R_z$ wird als Höhenunterschied der größten Profilspitze und des tiefsten Profiltals innerhalb einer Einzelmessstrecke nach DIN EN ISO 4287 ermittelt. $R_z$ ist der arithmetische Mittelwert von fünf Einzelmessstrecken.

### Messergebnisse

Die Rohrstrang-Teilstücke werden als Substratrohr für die Abscheidung von $SiO_2$-Schichten auf der Innenwandung mittels eines MCVD-Verfahrens oder eines anderen Plasma-Innenabscheideverfahrens verwendet. Das Substratrohr zeichnet sich trotz vergleichsweise kostengünstiger Fertigungsparameter - insbesondere wegen des Einsatzes dickwandiger Quarzglas-Ausgangszylinder sowie einer wenig aufwändigen mechanischen Endbearbeitung von Innenwandung und Außenwandung des Hohlzylinders - durch eine hinreichend glatte Innenoberfläche sowie durch hohe Maßhaltigkeit aus, insbesondere durch eine geringe Durchbiegung. Eine Biegung von maximal 0,7 mm/m und eine Rauigkeit der Innenoberfläche mit einem Rz-Wert von maximal 0,15 μm werden als akzeptabel betrachtet.

Detaillierte Angaben zu Prozessparametern und Ergebnissen finden sich in Tabelle 1. Dabei bedeuten:

| | |
|---|---|
| $C_a$ | Außendurchmesser des Hohlzylinders |
| $C_i$ | Innendurchmesser des Hohlzylinders |
| $T_A$ | nominaler Außendurchmesser des Rohrstrangs |
| $T_I$ | nominaler Innendurchmesser des Rohrstrangs |
| $C_R$ | Durchmesserverhältnis $C_a/C_i$ |
| $T_R$ | Durchmesserverhältnis $T_a/T_i$ |

A(C) = Innenoberfläche des Hohlzylinders

A(T) = Innenoberfläche des Rohres

L(C) = Länge des Hohlzylinders

L(T) = Länge des Rohrstrangs

Anhand der aus WO 2004/083141 A1 zu entnehmenden Geometrie- und Ziehparameter wurde eine Referenzprobe gefertigt (Tabelle 1, Zeile 1). Die Proben 2, 4, 6, 8 und 9 stellen weitere Vergleichsproben dar. Die von der erfindungsgemäßen abweichenden Parameter sind in der Tabelle grau hinterlegt. Es zeigt sich, dass ein geringes Durchmesserverhältnis beim Ausgangszylinder ($C_r < 3$) in der Regel mit einem geringen Umformgrad - repräsentiert durch das Verhältnis der Innenoberflächen A(T)/A(C) einhergeht, und zwar auch dann, wenn das Ausziehverhältnis (L(T) / L(C)) relativ groß ist. Dies führt bei der als Referenz vorgegebenen Endbearbeitung der Hohlzylinder jedoch zu einer nicht akzeptablen Rauigkeit der Innenoberfläche beim abgezogenen Rohrstrang, wie bei den Vergleichsproben 4, 6 und 9. Demgegenüber zeigen die Proben 2 und 8 zwar eine akzeptable Rauigkeit, jedoch eine verstärkte Durchbiegung, was auf den großen Unterschied der Innendurchmesser von Hohlzylinder und Rohrstrang, also auf das Verhältnis $C_i/T_i$ und den damit einhergehenden Umformgrad in radialer Richtung zurückgeführt werden kann.

**Patentansprüche**

1. Verfahren zur Herstellung eines Substratrohres aus Quarzglas, umfassend einen Verfahrensschritt, bei dem ein einen Außendurchmesser $C_a$, einen Innendurchmesser $C_i$ und eine Innenbohrung aufweisender Quarzglas-Hohlzylinder kontinuierlich einer Heizzone (3) zugeführt, darin bereichsweise erweicht und aus dem erweichten Bereich ein Rohrstrang (12) mit einem Außendurchmesser $T_a$ und einem Innendurchmesser $T_i$ abgezogen und dabei in der Innenbohrung (13) ein Blasdruck erzeugt wird, **dadurch gekennzeichnet, dass** der Blasdruck im Bereich von 4 bis 10 mbar eingestellt wird, und dass für Hohlzylinder (4) und Rohrstrang (12) gelten:

$$C_a > 180 \text{ mm,}$$

$$C_r > 3 \text{ mit } C_r = C_a/C_i,$$

$$T_r < 1,6 \text{ mit } T_r = T_a/T_i$$

und

$$C_i/T_i < 2,5.$$

2. Verfahren nach Anspruch 1, **dadurch gekennzeichnet, dass** der Blasdruck im Bereich von 6 bis 8 mbar eingestellt wird, und dass für den Hohlzylinder gilt:

$$C_a < 300 \text{ mm}$$

und

$$C_i/T_i < 2.$$

3. Verfahren nach Anspruch 1 oder 2, **dadurch gekennzeichnet, dass** für den Rohrstrang gilt:

$$28 \text{ mm}< T_a < 50 \text{ mm}$$

und

$$T_r < 1,3.$$

4. Verfahren nach einem der vorhergehenden Ansprüche, **dadurch gekennzeichnet, dass** für Hohlzylinder und Rohrstrang gelten:

$$3,5 < C_r < 4,5$$

und

$$C_r > T_r + 2,4.$$

5. Verfahren nach einem der vorhergehenden Ansprüche, **dadurch gekennzeichnet, dass** der Hohlzylinder eine Innenbohrung mit einer Innenwandung hat, die eine Oberflächenrauigkeit aufweist, die durch einen Rauheitswert $R_z > 1$ μm definiert ist.

6. Verfahren nach einem der vorhergehenden Ansprüche, **dadurch gekennzeichnet, dass** der Hohlzylinder eine Außenwandung hat, die eine Oberflächenrauigkeit aufweist, die durch einen Rauheitswert $R_z > 4$ μm definiert ist.

7. Verfahren nach einem der vorhergehenden Ansprüche, **dadurch gekennzeichnet, dass** eine Heizzone (1) eingesetzt wird, die einen von einer Innenwandung begrenzten, kreisrunden Innenraum (3) aufweist, der ein Heizraumvolumen $V_{Heiz}$ definiert, innerhalb dem Hohlzylinder (4), Ziehzwiebel (11) und Rohrstrang (12) ein Zylinder-Raumvolumen $V_c$ einnehmen, wobei gilt $V_{Heiz} > 2,5 \times V_c$.

8. Verfahren nach Anspruch 7, **dadurch gekennzeichnet, dass** zwischen der Heizzonen-Innenwandung und dem Hohlzylinder (4) ein Ringspalt mit einer mittleren Spaltweite im Bereich von 15 und 25 mm verbleibt.

9. Verfahren nach einem der vorhergehenden Ansprüche, **dadurch gekennzeichnet, dass** die Heizzone (1) eine Länge L zwischen 150 und 200 mm aufweist.

10. Verfahren nach einem der vorhergehenden Ansprüche, **dadurch gekennzeichnet, dass** der Rohrstrang-Außendurchmesser Ta auf einen Wert im Bereich von 28 bis maximal 35 mm und das Durchsatzvolumen auf einen Wert im Bereich von 10 bis 20 kg/h eingestellt werden.

11. Verfahren nach einem der Ansprüche 1 bis 10, **dadurch gekennzeichnet, dass** der Rohrstrang-Außendurchmesser Ta auf einen Wert im Bereich von 35 bis 50 mm und das Durchsatzvolumen auf einen Wert im Bereich von 20 bis 30 kg/h eingestellt werden.

12. Verfahren nach einem der vorhergehenden Ansprüche, **dadurch gekennzeichnet, dass** der Rohrstrang mit einem Elongierverhältnis von weniger als 150, bevorzugt im Bereich zwischen 50 und 130 abgezogen wird.

**Claims**

1. A method for producing a substrate tube of quartz class, comprising continuously supplying to a heating zone (3) a hollow cylinder of quartz glass having an outer diameter $C_a$, an inner diameter $C_i$ and an inner bore, zonewise softening said hollow cylinder in said heating zone (3), and drawing off from the softened portion a tubular strand (12) with an outer diameter $T_a$ and an inner diameter $T_i$, wherein a blow pressure is produced in the inner bore (13) that is set in the range of 4 to 10 mbar, and wherein the following is applicable to hollow cylinder (4) and tubular strand (12):

$$C_a > 180 \text{ mm},$$

$$C_r > 3 \text{ with } C_r = C_a/C_i,$$

$$T_r < 1.6 \text{ with } T_r = T_a/T_i$$

and

$$C_i/T_i < 2.5.$$

2. The method according to claim 1, **characterized in that** the blow pressure is set in the range of 6 to 8 mbar, and that the following is applicable to the hollow cylinder:

$$C_a < 300 \text{ mm}$$

and

$$C_i/T_i < 2.$$

3. The method according to claim 1 or 2, **characterized in that** the following is applicable to the tubular strand:

$$28 \text{ mm} < T_a < 50 \text{ mm}$$

and

$$T_r < 1.3.$$

4. The method according to any one of the preceding claims, **characterized in that** the following is applicable to hollow cylinder and tubular strand:

$$3.5 < C_r < 4.5$$

and

$$C_r > T_r + 2.4.$$

5. The method according to any one of the preceding claims, **characterized in that** the hollow cylinder has an inner bore with an inner wall that has a surface roughness defined by a roughness value $R_z > 1 \mu m$.

6. The method according to any one of the preceding claims, **characterized in that** the hollow cylinder has an outer wall that has a surface roughness defined by a roughness value $R_z > 4 \mu m$.

7. The method according to any one of the preceding claims, **characterized in that** a heating zone (1) is used that comprises a circular heating space (3) which is bounded by an inner wall and which defines a heating space volume $V_{Heiz}$ within which hollow cylinder (4), drawing bulb (11) and tubular strand (12) occupy a cylinder space volume Vc, where $V_{Heiz} > 2.5 \times V_c$.

8. The method according to claim 7, **characterized in that** an annular gap with a mean gap width in the range of 15 mm and 25 mm remains between the inner wall of the heating zone and the hollow cylinder (4).

9. The method according to any one of the preceding claims, **characterized in that** the heating zone (3) has a length L between 150 mm and 200 mm.

10. The method according to any one of the preceding claims, **characterized in that** the outer diameter $T_a$ of the tubular strand is set to a value in the range of 28 mm to not more than 35 mm and the throughput volume is set to a value in the range of 10 to 20 kg/h.

11. The method according to any one of claims 1 to 10, **characterized in that** the outer diameter Ta of the tubular strand is set to a value in the range of 35 mm to 50 mm and the throughput volume is set to a value in the range of 20 to 30 kg/h.

12. The method according to any one of the preceding claims, **characterized in that** the tubular strand is drawn off at an elongation ratio of less than 150, preferably in the range between 50 and 130.

**Revendications**

1. Procédé de fabrication d'un tube substrat à partir de verre de quartz, comprenant une étape de procédé, où un cylindre creux en verre de quartz présentant un diamètre extérieur $C_a$, un diamètre intérieur $C_i$ et un alésage intérieur est amené en continu à une zone de chauffage (3), y est ramolli par endroits, une ligne de tubes (12) avec un diamètre extérieur $T_a$ et un diamètre intérieur $T_i$ est retirée de la zone ramollie et une pression de soufflage est ce faisant générée dans l'alésage intérieur (13), **caractérisé en ce que** la pression de soufflage est réglée dans la plage de 4 à 10 mbar, et que s'appliquent pour le cylindre creux (4) et la ligne de tubes (12) :

$$C_a > 180 \text{ mm,}$$

$$C_r > 3 \text{ avec } C_r = C_a/C_i,$$

$$T_r < 1{,}6 \text{ avec } T_r = T_a/T_i$$

et

$$C_i/T_i < 2{,}5.$$

2. Procédé selon la revendication 1, **caractérisé en ce que** la pression de soufflage est réglée dans la plage de 6 à 8 mbar, et que s'applique pour le cylindre creux :

$$C_a < 300 \text{ mm,}$$

et

$$C_i/T_i < 2.$$

3. Procédé selon la revendication 1 ou 2, **caractérisé en ce que** s'applique pour la ligne de tubes :

$$28 \text{ mm} < T_a < 50 \text{ mm,}$$

et

$$T_r < 1{,}3.$$

4. Procédé selon l'une quelconque des revendications précédentes, **caractérisé en ce que** s'appliquent pour le cylindre creux et la ligne de tubes :

$$3{,}5 < C_r < 4{,}5$$

et

$$C_r > T_r + 2{,}4.$$

5. Procédé selon l'une quelconque des revendications précédentes, **caractérisé en ce que** le cylindre creux a un alésage intérieur avec une paroi intérieure, qui présente une rugosité de surface qui est définie par une valeur de rugosité $R_z > 1 \mu m$.

**6.** Procédé selon l'une quelconque des revendications précédentes, **caractérisé en ce que** le cylindre creux a une paroi extérieure, qui présente une rugosité de surface qui est définie par une valeur de rugosité $R_z > 4$ µm.

**7.** Procédé selon l'une quelconque des revendications précédentes, **caractérisé en ce qu'**est employée une zone de chauffage (1), qui présente un espace intérieur (3) rond circulaire délimité par une paroi intérieure, qui définit un volume d'espace de chauffage $V_{Chauff}$, à l'intérieur duquel des cylindres creux (4), des cornets (11) et une ligne de tubes (12) adoptent un volume d'espace cylindrique Vc, dans lequel s'applique $V_{Chauff} > 2,5 \times V_c$.

**8.** Procédé selon la revendication 7, **caractérisé en ce qu'**une fente annulaire avec une largeur de fente moyenne dans la plage de 15 à 25 mm reste entre la paroi intérieure de zones de chauffage et le cylindre creux (4).

**9.** Procédé selon l'une quelconque des revendications précédentes, **caractérisé en ce que** la zone de chauffage (1) présente une longueur L entre 150 et 200 mm.

**10.** Procédé selon l'une quelconque des revendications précédentes, **caractérisé en ce que** le diamètre extérieur de ligne de tubes Ta est réglé sur une valeur dans la plage de 28 à 35 mm au maximum et le débit est réglé sur une valeur dans la plage de 10 à 20 kg/h.

**11.** Procédé selon l'une quelconque des revendications 1 à 10, **caractérisé en ce que** le diamètre extérieur de ligne de tubes Ta est réglé sur une valeur dans la plage de 35 à 50 mm et le débit est réglé sur une valeur dans la plage de 20 à 30 kg/h.

**12.** Procédé selon l'une quelconque des revendications précédentes, **caractérisé en ce que** le train de tubes est retiré avec un rapport d'élongation inférieur à 150, de manière préférée dans la plage entre 50 et 130.

**Fig. 1**

## Tabelle 1

| Probe | $C_a$ [mm] | $C_i$ [mm] | $T_a$ [mm] | $T_i$ [mm] | $C_R$ | $T_R$ | Innen-durch-messer-Verhältnis $C_i / T_i$ | Innen-ober-flächen-Verhältnis $A(T) / A(C)$ | Auszieh-verhältnis $L(T) / L(C)$ | Blas-druck [mbar] | Rauheit $R_z$ [µm] | Biegung [mm/m] |
|---|---|---|---|---|---|---|---|---|---|---|---|---|
| Referenz: WO2004/083141 A1 | 150 | 70 | 28 | 22 | 2,1 | 1,3 | 3,2 | 18,4 | 59 | 3 | 0,22 | 1,1 |
| 1 | 180 | 55 | 30 | 26 | 3,3 | 1,2 | 2,1 | 62,0 | 131 | 7 | 0,10 | 0,2 |
| 2 Vergleich | 180 | 70 | 30 | 26 | 2,6 | 1,2 | 2,7 | 45,6 | 123 | 6 | 0,11 | 0,8 |
| 3 | 200 | 55 | 39 | 34 | 3,6 | 1,1 | 1,6 | 62,6 | 101 | 8 | 0,12 | 0,4 |
| 4 Vergleich | 200 | 70 | 39 | 34 | 2,9 | 1,1 | 2,1 | 46,7 | 96 | 7 | 0,16 | 0,4 |
| 5 | 220 | 60 | 40 | 34 | 3,7 | 1,2 | 1,8 | 57,2 | 101 | 8 | 0,13 | 0,5 |
| 6 Vergleich | 220 | 80 | 40 | 34 | 2,8 | 1,2 | 2,4 | 40,2 | 95 | 7 | 0,18 | 0,6 |
| 7 | 240 | 42 | 25 | 17 | 5,7 | 1,5 | 2,47 | 67,3 | 166 | 8 | 0,15 | 0,7 |
| 8 Vergleich | 240 | 80 | 25 | 17 | 3,0 | 1,5 | 4,7 | 32,4 | 152 | 7 | 0,14 | 1,2 |
| 9 | 200 | 50 | 90 | 47 | 4,0 | 1,9 | 1,1 | 6,0 | 6 | 5 | 0,25 | 0,3 |
| 10 | 290 | 50 | 33 | 21 | 5,8 | 1,57 | 2,4 | 52,9 | 126 | 8 | 0,09 | 0,7 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5785729 A

- WO 2004083141 A1